(19) 

Europäisches Patentamt
European Patent Office
Office européen des brevets

(11) **EP 4 323 656 B1**

(12) **EUROPEAN PATENT SPECIFICATION**

(45) Date of publication and mention
of the grant of the patent:
**05.03.2025 Bulletin 2025/10**

(21) Application number: **22720724.8**

(22) Date of filing: **07.04.2022**

(51) International Patent Classification (IPC):
**F16B 13/06** *(2006.01)*

(52) Cooperative Patent Classification (CPC):
**F16B 13/065**

(86) International application number:
**PCT/EP2022/059175**

(87) International publication number:
**WO 2022/218786 (20.10.2022 Gazette 2022/42)**

(54) **EXPANSION ANCHOR**

SPREIZDÜBEL

ANCRAGE D'EXPANSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.04.2021 EP 21168037**

(43) Date of publication of application:
**21.02.2024 Bulletin 2024/08**

(73) Proprietor: **Hilti Aktiengesellschaft
9494 Schaan (LI)**

(72) Inventor: **SHIMAHARA, Hideki
9472 Grabs (CH)**

(74) Representative: **Hilti Aktiengesellschaft
Corporate Intellectual Property
Feldkircherstrasse 100
Postfach 333
9494 Schaan (LI)**

(56) References cited:
**WO-A1-2019/243084       DE-A1- 3 620 573
KR-U- 20160 002 742**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to an expansion anchor according to the preamble of claim 1. Such an anchor is provided with an anchor bolt, an expansion sleeve that surrounds the anchor bolt, and a wedge body located in a front region of the anchor bolt for wedging the expansion sleeve, wherein the expansion sleeve has a front face facing the wedge body, wherein at least one expansion slit is provided within the expansion sleeve, wherein the expansion slit originates at the front face of the expansion sleeve, wherein the expansion slit has a stem and a head that adjoins the stem, wherein the head is wider than the stem, and wherein the stem is located between the head and the front face of the expansion sleeve.

EP2848825 A1 discloses an expansion anchor in which the expansion sleeve has at least one web on its inner side, which web engages a groove in the anchor bolt. The expansion sleeve thus has non-uniform wall thickness. During installation, the web is displaced radially outwardly by the wedge body of the bolt.

WO19081300 A1 describes an expansion anchor with expansion sleeve abutment walls provided on the expansion body. The expansion sleeve abutment walls can engage with the expansion sleeve to provide an interlock when the anchoring process has reached an advanced state. The expansion sleeve abutment walls can be provided at the ends of recesses provided in the expansion body. On this basis, WO19243084 A1 further teaches to provide said recesses with nonaxisymmetric cross-section. According to WO19243084 A1, the expansion sleeve has, again, non-uniform wall thickness.

WO 15067578 A1 describes an expansion anchor having grooves disposed in the wedge body, wherein the grooves reduce the contact surface between the expansion sleeve and the wedge body.

EP2514979 A1 shows an anchor bolt with an eccentric region that widens the expansion sleeve upon rotation of the anchor bolt.

EP2309138 A2 and WO12126700 A1 describe anchor bolts having structured wedge bodies.

It is an object of the present invention to provide an expansion anchor that is particularly easy to manufacture and/or has particularly high performance.

This objective is achieved by an expansion anchor according to claim 1. The dependent claims describe preferred embodiments.

An inventive anchor is characterized in that the head is located off-centre with respect to the stem.

Accordingly, the head is offset with respect to the stem, in particular in the circumferential direction, and in particular by distance $d_o$. Consequently, a stem centre-line defined by the stem does not pass through the centroid of the head. In particular, the union consisting of stem and head can have a nonaxisymmetric outline and/or a music note shaped outline.

The expansion slits define forwardly facing expansion fingers of the expansion sleeve, which expansion fingers are wedged radially outwardly by the wedge body during installation of the anchor. Since the head is, in the circumferential direction, wider than the stem, the head forms a constriction, i.e. a weakening, in the adjacent expansion fingers, which facilitates outward wedging of these expansion fingers. On the other hand, due to its rearward arrangement and due to its width, the head tends to define a bending point when the expansion sleeve is manufactured in a bending process. By arranging the head off-centre with respect to the stem, it is possible to relocate the bending point relevant to the manufacturing process in the circumferential direction, which in term might facilitate the manufacturing process. Notwithstanding, the head can still function to facilitate outward expansion of the adjacent expansion fingers. Thus, a particularly well performing anchor might be obtained at particularly low effort.

The anchor bolt is an elongate body. The wedge body and the anchor bolt are, in particular, connected to transfer tensile forces. The wedge body can for example be threaded to the anchor bolt, in particular if the expansion anchor is a so-called sleeve-type expansion anchor. The wedge body can also be tightly fixed to the anchor bolt, in particular if the expansion anchor is a so-called stud-type expansion anchor. It is particularly preferred in case of a stud-type expansion anchor that the wedge body and the anchor bolt are monolithic, i.e. that they form one piece. If the expansion anchor is a so-called stud-type expansion anchor, the anchor bolt is preferably provided with a forwardly facing shoulder for expansion sleeve abutment and for advancing the expansion sleeve into the borehole. The wedge body is a part of the expansion anchor.

The expansion sleeve surrounds the anchor bolt, in particular around the longitudinal axis of the anchor bolt. In particular, the expansion sleeve can be a single piece.

Preferably, the anchor bolt, the expansion sleeve and/or the wedge body are each steel parts. They can for example comprise carbon steel or stainless steel.

The anchor bolt can have, in particular in a rear region of the anchor bolt, a tension-introducing structure. The tension-introducing structure is for introducing tensile forces into the anchor bolt. The tension-introducing structure can for example be a thread, in particular an external thread, provided on the anchor bolt. The tension-introducing structure can for example also be a head, that forms a maximum cross-section, or a bayonet-type lock.

The wedge zone of the wedge body is intended to expand the expansion sleeve when the wedge body is moved rearwards with respect to the expansion sleeve, in particular to expand the expansion sleeve radially with respect to the longitudinal axis. The wedge body converges, on its lateral surface, towards the rear of the anchor bolt and/or towards the tension-introducing structure, wherein the focus of convergence can preferably be the longitudinal axis. This in particular implies that the radial distance of the lateral surface of the wedge body from the longitudinal axis becomes smaller towards the rear of the wedge body. In particular, the wedge zone forms a wedge for the expansion sleeve.

The at least one expansion slit cuts the expansion sleeve and subdivides the expansion sleeve into expansion fingers. In particular, the at least one expansion slit cuts all the way through the wall thickness of the expansion sleeve, i.e. the expansion slit forms a radial perforation of the expansion sleeve. The expansion slit originates from the front face and extends rearwardly into the expansion sleeve. Preferably, the expansion slit extends generally parallel to the longitudinal axis, but it could also be angled with respect to the longitudinal axis. The stem of the expansion slit is located between the head of the expansion slit and the front face of the expansion sleeve, i.e. the head is located at the rear of the stem. In particular, the head can define a rear end of the expansion slit. The head is wider than the stem, in particular in the circumferential direction. In some embodiments, the front face of the expansion sleeve can be provided with a delta structure that converges into the slit, for example to provide a rounding. The delta structure might be wider than the head, at least in some regions of the delta structure.

Preferably, the expansion sleeve has a plurality of expansion slits originating at the front face of the expansion sleeve. If there is a plurality of expansion slits provided, at least some of them, preferably all of them, are preferably configured in analogy to the at least one expansion slit described herein.

The expansion sleeve might also have one or more additional slits. In contrast to the expansion slit, these additional slits might not have a head.

Where the term "longitudinal axis" is used, this should, in particular, refer to the longitudinal axis of the anchor bolt, which is often also the longitudinal axis of the anchor. In accordance with the usual definition, the "longitudinal axis" can in particular be the axis that runs in the longitudinal direction, i.e. in the long direction of the elongate anchor bolt. Where the terms "radially", "axially" or "circumferentially" are used, this is should in particular be understood with respect to the longitudinal axis of the anchor bolt.

Preferentially, the head has an elongate outline. It is particularly preferred that an axis of elongation of the elongate outline extents generally perpendicular to the stem. Accordingly, the head has a non-circular, elongate outline, wherein, preferably, an axis of elongation of the elongate outline extents generally perpendicular to the stem. Providing the head with an elongate outline can allow to delocalize the bending point relevant to the manufacturing process of the expansion sleeve, which can provide smoother curvature and/or further facilitate manufacturing in a particular easy manner.

In particular, the invention can be used with expansion anchors in which the expansion sleeve has non-constant wall thickness, i.e. in which the wall of the expansion sleeve varies in dependence of the position on the expansion sleeve. As explained in further detail in e.g. EP2848825 A1, which is included by reference, non-constant wall thickness can be provided in order to improve anchor performance.

Advantageously, the head is off-centre with respect to the stem into an expansion sleeve region of reduced wall thickness. Accordingly, by being off-centre, the head reaches into an expansion sleeve region of reduced wall thickness. In other words, the offset reduces the average wall thickness along the outline of the head, i.e. the average wall thickness along the outline of the head is smaller as compared to a fictional state in which the head was centred with respect to the stem. This can efficiently counteract cracking of the expansion sleeve when it is formed by bending a generally flat blank, and/or improve roundness of the expansion sleeve after such a bending operation. Moreover, resistance for radial expansion of the expansion sleeve can be reduced, which can improve initial anchoring. Also, separation of the expansion fingers during pull out can be efficiently counteracted.

The invention is explained in greater detail below with reference to preferred exemplary embodiments, which are depicted schematically in the accompanying drawings, wherein individual features of the exemplary embodiments presented below can be implemented either individually or in any combination within the scope of the present invention.

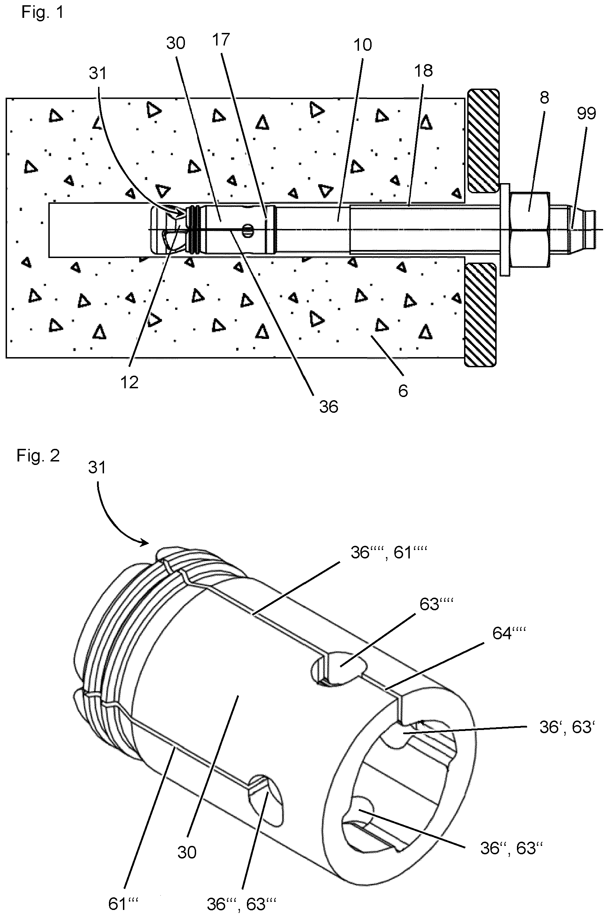

Figure 1 is a side view of an inventive expansion anchor.
Figure 2 is a perspective view of the expansion sleeve of the anchor of figure 1.
Figure 3 is a side view of the expansion sleeve of the anchor of figure 1.
Figure 4 is a cross-sectional view A-A according to figure 3 of the expansion sleeve of the anchor of figure 1.

The figures show an embodiment of an inventive expansion anchor. The expansion anchor comprises an elongate anchor bolt 10 defining a longitudinal axis 99, an expansion sleeve 30, which surrounds the anchor bolt 10, and a wedge body 12 provided on the anchor bolt 10, namely in the vicinity of the front end of the anchor bolt 10. The wedge body 12 is designed for wedging the expansion sleeve 30 radially outwardly when the wedge body 12 is drawn into the expansion sleeve 30 in the rearwards direction, i.e. in the pull-out direction. For this purpose, the lateral surface of the wedge body 12 converges rearwardly, at least regionally. The longitudinal axis 99 extends through the front end and through the rear end of the anchor bolt 10.

The anchor bolt 10 has a neck, which is located adjacent to and rearwards of the wedge body 12. The expansion sleeve 30 at least partly surrounds this neck, at least before installation of the anchor. At the neck, the diameter of the anchor bolt 10 can be minimal.

In the present embodiment, the expansion anchor is a stud type anchor. Hence, the anchor bolt 10 has, at the rearward end of the neck, a shoulder 17 facing forwards for axially engaging the expansion sleeve 30 and for advancing the expansion sleeve 30 forwards. In the present case, the wedge body 12 is, by way of example, integral with the remainder of the anchor bolt 10, but in alternative embodiments, the anchor bolt 10 can consist of several separate parts.

In a rear region of the anchor bolt 10, the anchor bolt 10 is provided with a tension-introducing structure 18, which is here, by way of example, an external thread provided on the anchor bolt 10. However, this is an example only, and other structures such as internal threads, bayonet mechanisms or heads can also be envisaged.

The expansion sleeve 30 is a C-shaped clip and is provided with a plurality of expansion slits 36', 36", 36''', 36''''. Each of these expansion slits 36', 36", 36''', 36'''' originates at the front face 31 of the expansion sleeve 30 (i.e. at that face of the expansion sleeve 30 that faces the wedge body 12) and extend towards the rear end of the expansion sleeve 30 (and thus towards the rear end of the anchor bolt 10). Each of the expansion slits 36', 36", 36''', 36'''' radially cuts through the expansion sleeve 30, i.e. each of the expansion slits 36', 36", 36''', 36'''' divides the expansion sleeve 30.

The expansion slit 36' comprises a stem 61' and a head 63' that adjoins the stem 61'. The head 63' is arranged rearwardly of the stem 61'. Accordingly, the stem 61' is arranged between the head 63' and the front face 31 of the expansion sleeve 30. The head 63' forms the rearward end of the expansion slit 36'. The stem 61' is a narrow, generally linear trench. Compared to the stem 61', the head 63' has greater width in the circumferential direction, i.e. around the longitudinal axis 99. Due to its width, the head 63' forms a local weakening of the adjacent expansion sleeve 30, which facilitates expansion of the expansion sleeve 30.

In the shown embodiment, the stem 61' extends, generally, in the axial direction, i.e. generally parallel to the longitudinal axis 99. However, angled configurations could also be envisaged.

The head 63' as a non-circular, elongate, for example approximately elliptical, outline, wherein the elongate direction generally follows the circumferential direction of the anchor bolt 10. The head 63' is located off-centre with respect to the stem 61'. Accordingly, the centreline of the stem 61' does not include the centroid of the head 63'; in other words, the centroid of the head 63' is distant from the centreline of the stem 61' by a distance $d_o$.

The expansion sleeve 30 has non-constant wall-thickness t, i.e. the wall thickness t is dependent on the position on the expansion sleeve 30, in particular on the circumferential position. The head 63' is located off-centre with respect to the stem 61' towards an expansion sleeve region of reduced wall thickness. In other words, the head 63' reaches into a region that has smaller wall thickness, as compared to an imaginary arrangement in which the head 63' is located centred with respect to the stem 61'.

The head 63' has a width $w_h$, measured perpendicular to the longitudinal axis 99 in the circumferential direction, and a length $l_h$, measured parallel to the longitudinal axis 99. Preferably, a ratio of the width $w_h$ to the nominal diameter $d_{nom}$ of the expansion anchor is >= 0.25 and/or <=1.0 and/or a ratio of the length $l_h$ to the nominal diameter $d_{nom}$ of the expansion anchor is >= 0.2.

Expansion slit 36" also comprises a stem 61" and a head 63", wherein these items are arranged and configured in analogy to expansion slit 36', so that the description above is applicable mutatis mutandis. Expansion slit 36''' also comprises a stem 61''' and a head 63''', wherein these items are arranged and configured in analogy to expansion slit 36', so that the description above is applicable mutatis mutandis. Expansion slit 36'''' also comprises a stem 61'''' and a head 63'''', wherein these items are arranged and configured in analogy to expansion slit 36', so that the description above is applicable mutatis mutandis. The expansion slits 36', 36", 36''' are blind slits each, and accordingly, they do not reach the rear end of the expansion sleeve 30. Accordingly, the head 63' defines a rear end of expansion slit 36', the head 63" defines a rear end of expansion slit 36" and the head 63''' defines a rear end of expansion slit 36'''. The expansion slit 36'''', on the other hand, is a through slit which, extends all the way through the expansion sleeve 30, i.e. from the front face 31 of the expansion sleeve 30 to the rear end of the expansion sleeve 30. Accordingly, the expansion slit 36'''' has a tail 64'''', which extends from the head 63'''' to the rear end of the expansion sleeve 30. The head 63'''' is thus located axially between the stem 61'''' and the tail 64''''. The expansion slit 36'''' being a through slit can be interrelated to a manufacturing process in which a flat blank is bent around the anchor bolt 10 to give the expansion sleeve 30, so that the expansion slit 36'''' gives the closure interface of the expansion sleeve 30.

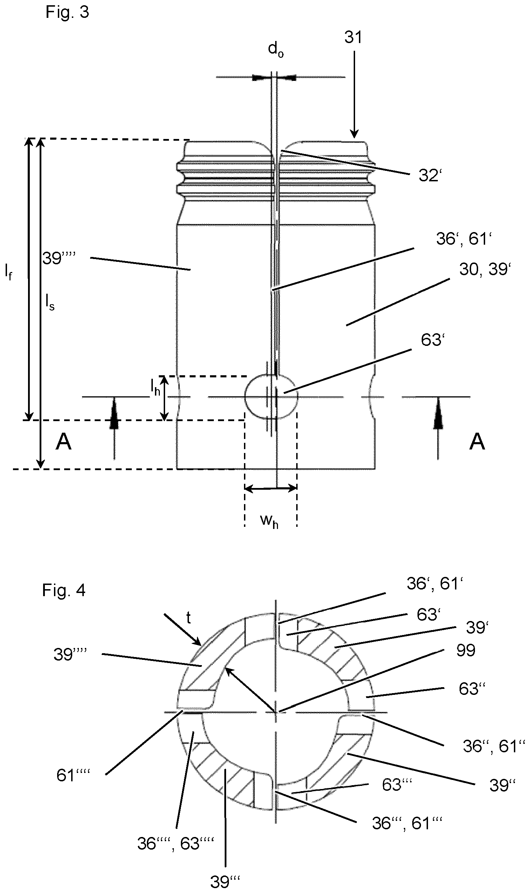

In the present embodiment, the front face 31 of the expansion sleeve 30 includes delta structures that converge into the expansion slits 36', 36", 36''', 36''''. In case of expansion slit 36' the corresponding delta structure is marked with reference numeral 32' in figure 3. The remaining expansion slits 36", 36''', 36'''' have similar delta structures provided at the front face 31. The delta structures provide a rounding of the front face 31, which might counteract galling at the wedge body 12.

In use, the expansion anchor is introduced, front end first, into a hole in a substrate 6. Subsequently, the wedge body 12 is drawn into the front face 31 of the expansion sleeve 30. In the present embodiment, this is achieved by pulling the anchor bolt 10 together with the wedge body 12 rearwardly, in particular by tightening a nut 8 provided on the tension-introducing structure 18 of the anchor bolt 10. This loads the expansion sleeve 30 radially outwardly, thereby locking the expansion anchor in the substrate.

The expansion slits 36', 36", 36‴, 36⁗ and the associated delta structures define expansion fingers 39', 39", 39‴, 39⁗ on the expansion sleeve 30. The described configuration of the expansion slits 36', 36", 36‴, 36⁗, in particular the described offset, allows the expansion fingers 39', 39", 39‴, 39⁗ to be relatively long. In particular, the expansion fingers 39', 39", 39‴, 39⁗ can each have a length $l_f$ which relates to the total length $l_s$ of the expansion sleeve 30 and/or the nominal diameter $d_{nom}$ of the expansion anchor as follows:

$$l_f/l_s > 0.8$$

$$l_f/d_{nom} > 1.3.$$

## Claims

1. Expansion anchor having

    - an anchor bolt (10),
    - an expansion sleeve (30) that surrounds the anchor bolt (10), and
    - a wedge body (12) located in a front region of the anchor bolt (10) for wedging the expansion sleeve (30), wherein the expansion sleeve (30) has a front face (31) facing the wedge body (12),
    - wherein at least one expansion slit (36) is provided within the expansion sleeve (30), wherein the expansion slit (36) originates at the front face (31) of the expansion sleeve (30), wherein the expansion slit (36) has a stem (61) and a head (63) that adjoins the stem (61), wherein the head (63) is wider than the stem (61), and wherein the stem (61) is located between the head (63) and the front face (31) of the expansion sleeve (30),

    **characterized in that**

    - the head (63) is located off-centre with respect to the stem (61).

2. Expansion anchor according to claim 1, **characterized in that** the head (63) has an elongate outline, wherein an axis of elongation of the elongate outline extents generally perpendicular to the stem (61).

3. Expansion anchor according to one of the preceding claims, **characterized in that** the expansion sleeve (30) has non-constant wall thickness (t), wherein the head (63) is off-centre with respect to the stem (61) into an expansion sleeve region of reduced wall thickness (t).

## Patentansprüche

1. Spreizanker, der aufweist

    - einen Ankerbolzen (10),
    - eine Spreizhülse (30), die den Ankerbolzen (10) umgibt, und
    - einen Keilkörper (12), der sich zum Verkeilen der Spreizhülse (30) in einem vorderen Bereich des Ankerbolzens (10) befindet, wobei die Spreizhülse (30) eine dem Keilkörper (12) zugewandte Stirnfläche (31) aufweist,
    - wobei innerhalb der Spreizhülse (30) mindestens ein Spreizschlitz (36) vorgesehen ist, wobei der Spreizschlitz (36) an der Stirnfläche (31) der Spreizhülse (30) beginnt, wobei der Spreizschlitz (36) einen Schaft (61) und einen an den Schaft (61) angrenzenden Kopf (63) aufweist, wobei der Kopf (63) breiter als der Schaft (61) ist und wobei der Schaft (61) sich zwischen dem Kopf (63) und der Stirnfläche (31) der Spreizhülse (30) befindet,

    **dadurch gekennzeichnet, dass**

    - der Kopf (63) sich außermittig in Bezug auf den Schaft (61) befindet.

2. Spreizanker nach Anspruch 1, **dadurch gekennzeichnet, dass** der Kopf (63) einen länglichen Umriss aufweist, wobei eine Verlängerungsachse des länglichen Umrisses sich im Wesentlichen senkrecht zu dem Schaft (61) erstreckt.

3. Spreizanker nach einem der vorstehenden Ansprüche, **dadurch gekennzeichnet, dass** die Spreizhülse (30) eine nicht konstante Wandstärke (t) aufweist, wobei der Kopf (63) außermittig in Bezug auf den Schaft (61) in einen Spreizhülsenbereich verringerter Wandstärke (t) ist.

## Revendications

1. Ancrage à expansion ayant

    - un boulon d'ancrage (10),
    - une coquille d'expansion (30) qui entoure le boulon d'ancrage (10), et
    - un corps de calage (12) situé dans une zone avant du boulon d'ancrage (10) pour caler la coquille d'expansion (30), dans lequel la coquille d'expansion (30) a une face avant (31) tournée vers le corps de calage (12),
- dans lequel au moins une fente d'expansion (36) est pourvue à l'intérieur de la coquille d'expansion (30), dans lequel la fente d'expansion (36) commence au niveau de la face avant (31) de la coquille d'expansion (30), dans lequel la fente d'expansion (36) a une tige (61) et une tête (63) qui jouxte la tige (61), dans lequel la tête (63) est plus large que la tige (61), et dans lequel la tige (61) est située entre la tête (63) et la face avant (31) de la coquille d'expansion (30),

**caractérisé en ce que**

- la tête (63) est décentrée par rapport à la tige (61).

2. Ancrage à expansion selon la revendication 1, **caractérisé en ce que**
la tête (63) a un contour allongé, dans lequel un axe d'allongement du contour allongé s'étend généralement perpendiculairement à la tige (61).

3. Ancrage à expansion selon l'une quelconque des revendications précédentes, **caractérisé en ce que**
la coquille d'expansion (30) a une épaisseur de paroi non constante (t), dans lequel la tête (63) est décentrée par rapport à la tige (61) dans une zone de coquille d'expansion d'épaisseur de paroi réduite (t).

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2848825 A1
- WO 19081300 A1
- WO 19243084 A1
- WO 15067578 A1
- EP 2514979 A1
- EP 2309138 A2
- WO 12126700 A1